# EUROPÄISCHE PATENTSCHRIFT

(11) **EP 3 011 176 B1**
(45) Veröffentlichungstag und Bekanntmachung des Hinweises auf die Patenterteilung: **08.05.2019**
(21) Anmeldenummer: 14727472.4
(22) Anmeldetag: 28.05.2014
(51) Int. Cl.: F03G 7/06, F16K 31/00, F16K 31/02

(54) **ANTRIEBSEINRICHTUNG SOWIE VERFAHREN ZUR ANSTEUERUNG DER ANTRIEBSEINRICHTUNG ZUR ERZEUGUNG EINER STELLBEWEGUNG**
DRIVE DEVICE AND A METHOD FOR CONTROLLING SAID DRIVE DEVICE IN ORDER TO PRODUCE AN ACTUATION MOVEMENT
DISPOSITIF D'ENTRAÎNEMENT ET PROCÉDÉ PERMETTANT DE COMMANDER LE DISPOSITIF D'ENTRAÎNEMENT AFIN DE PRODUIRE UN MOUVEMENT DE RÉGLAGE

(30) Priorität: 17.06.2013 DE 102013010027
(43) Veröffentlichungstag der Anmeldung: 27.04.2016
(73) Patentinhaber: Otto Egelhof GmbH & Co. KG, 70736 Fellbach (DE)
(72) Erfinder: SOHN, Jürgen, 73732 Esslingen (DE)
(74) Vertreter: Mammel und Maser
(86) Internationale Anmeldenummer: PCT/EP2014/061099
(87) Internationale Veröffentlichungsnummer: WO 2014/202369

(56) Entgegenhaltungen:
- EP-A1- 0 841 510
- EP-A1- 1 619 287
- DE-A1- 4 322 731
- DE-A1-102006 037 650
- DE-A1-102008 054 900
- JP-U- H0 229 378
- US-A- 5 211 371

## Beschreibung

Die Erfindung betrifft eine Antriebseinrichtung zur Erzeugung einer Stellbewegung sowie ein Verfahren zur Ansteuerung einer solchen Antriebseinrichtung.

Aus der DE 10 2008 054 900 A1 ist eine Aktuatorvorrichtung bekannt. Diese Aktuatorvorrichtung weist zwei Anschlusselemente auf, zwischen denen zumindest ein Stellelement sowie ein Rückstellelement angeordnet sind, wobei durch das Stellelement und das Rückstellelement die Anschlusselemente auf Abstand gehalten sind. Das zumindest eine Stellelement und Rückstellelement wirken dabei in entgegengesetzter Richtung.

Eine analoge Anordnung ist aus der DE 43 22 731 A1 bekannt.

Die JP 2 -29378 betrifft eine Ventilanordnung, bei welcher ein Ventilschließglied innerhalb einer Membran vorgesehen ist. Eine Schließbewegung wird über einen Hubmagneten angesteuert. Eine Rückstellbewegung des Ventilelements wird durch eine Rückstellfeder angesteuert.

Aus der DE 10 2006 037 650 A1 ist ein Linearbewegungsaktuator bekannt, welcher zumindest ein Stellelement umfasst, das gegen die Wirkung eines Federelementes bewegbar ist. Dadurch kann ein Betätigungsglied angesteuert werden, wobei das Betätigungsglied durch Einwirkung der Kraft des Federelementes in einer Grundposition gehalten ist und die auf das Betätigungsglied wirkende Kraft des Federelementes kleiner als eine Betätigungskraft des zumindest einen Stellelementes vorgesehen ist, welches aus einer Formgedächtnislegierung ausgebildet ist. Bei dieser Ausführungsform ist vorgesehen, dass das Federelement als Teil einer Trägervorrichtung ausgebildet ist, an welchem das Betätigungsglied vorgesehen ist.

Solche Linearbewegungsaktuatoren haben sich im Einsatz bewährt, jedoch sind die Anwendungs- und Einsatzfälle aufgrund dessen Bauform beschränkt.

Aus der DE 10 2006 006 241 A1 ist ein weiterer Linearbewegungsaktuator bekannt, bei welchem ein Gehäuse mit einem Betätigungsglied vorgesehen ist, welches mit einem Federelement in einer Grundstellung positioniert ist, wobei das Betätigungsglied an einer Grundplatte anliegt. Zur Ansteuerung des Stellweges ist ein Stellelement aus einer Formgedächtnislegierung vorgesehen, wobei zur Aktivierung der Stellelemente gleichzeitig ein Entriegeln einer Fang- oder Haltevorrichtung erfolgt.

Aus der DE 10 2008 021 444 A1 ist des Weiteren ein Aktuator mit mindestens zwei Stellelementen bekannt, wobei an jedem Stellelement ein SMA-Draht integriert ist. Dieser Aktuator ist mit seinem Stellelement senkrecht zu einer Grundplatte in einer Führung angeordnet und entlang der Führung verfahrbar, um eine Ventilöffnung zu schließen.

Aus der US 6,762,515 B1 ist ein Aktuator mit Stellelementen aus einer Formgedächtnislegierung bekannt, der kaskadenartig aufgebaut ist, so dass eine Stellbewegung eines ersten SMA-Drahtes ein erstes Stellglied beeinflusst, in welchem ein zweiter SMA-Draht befestigt ist, der wiederum ein zweites Stellglied usw. beeinflusst. Dadurch wird eine Mehrfachübersetzung für einen vergrößerten Hub geschaffen.

Aus der DE 10 2012 212 686 A1 ist ein Ventil in einer Druckkammer bekannt, welches zwei Ventilschließglieder aufweist, die wechselseitig in Abhängigkeit der Ansteuerung eines SMA-Drahtes und der Rückstellbewegung eines Federelementes eine Öffnung der Druckkammer schließen, gleichzeitig die andere freigeben und umgekehrt.

Aus der EP 1 619 287 A1 ist eine elektrisch aktivierbare Verschlussvorrichtung für ein Haushaltsgerät bekannt. Diese Verschlussvorrichtung umfasst ein Stellelement aus einer Formgedächtnislegierung, um eine Verschlussplatte in eine Entriegelungsposition überzuführen. Dies erfolgt bei Bestromung des Stellelementes Mittels einer Energiequelle. Die Verriegelungsplatte wird über separat an der Verriegelungsvorrichtung angeordneten Rückstellelementen wieder in eine Ausgangsposition zurückgeführt, sobald das Stellelement stromlos geschalten ist. Das Stellelement aus einer Formgedächtnislegierung ist einerseits an einem Gehäuse fest angeordnet und gegenüberliegend an der relativ zum Gehäuse verfahrbaren Verriegelungsplatte.

Aus der EP 0 841 510 A1 ist ein kompaktes Ventil zur Steuerung einer Flüssigkeit bekannt. In einem Gehäuse ist ein Ventilsitz als Basiselement vorgesehen, dem ein Ventilschließglied zugeordnet ist. Zum Schließen des Ventils wird ein Stellelement aus einer Formgedächtnislegierung aktiviert, welches entgegen einer Rückstellfeder arbeitet, die an dem Ventilsitz einerseits und dem Ventilschließglied andererseits angreift. Das Stellelement ist außerhalb des Gehäuses des Ventils geführt.

Aus der US 5,211,371 A ist ein linear ansteuerbares Ventil bekannt, bei dem in einem Gehäuse eine Führungshülse eingesetzt ist, innerhalb der ein Anschlusselement fest zum Gehäuse angeordnet ist und ein gegenüberliegendes Anschlusselement gegenüber einem Ventilsitz in eine Öffnungsrichtung ansteuerbar ist. Zwischen den beiden Anschlusselementen sind ein Stellelement aus einer Formgedächtnislegierung sowie koaxial dazu angeordnet ein Rückstellelement vorgesehen.

### Die vorstehenden Ausführungsbeispiele erfordern eine spezielle

Anpassung im Aufbau und der Anordnung für die Anwendung.

Der Erfindung liegt die Aufgabe zugrunde, eine Antriebseinrichtung sowie ein Verfahren zur Ansteuerung der Antriebseinrichtung vorzuschlagen, welche vielfältig einsetzbar und modular aufbaubar ist.

Diese Aufgabe wird durch eine Antriebseinrichtung zur Erzeugung einer Stellbewegung gelöst, bei welcher das zumindest eine Stellelement zwischen zwei getrennt voneinander und im Abstand zueinander angeordneten Anschlusselementen aufgenommen ist und an jedem Anschlusselement angreift oder befestigt ist, wobei die Anschlusselemente durch das zumindest eine Stellelement sowie das zumindest eine Rückstellelement, die zwischen den Anschlusselementen positioniert und auf Abstand gehalten und durch deren entgegen gesetzte Wirkrichtungen die Anschlusselemente in einer definierten Ausgangslage für die Ansteuerung einer Stellbewegung positioniert sind und das Stellelement mit zumindest einem Klemmelement in einer Durchgangsbohrung des Anschlusselements gehalten oder einfach umgelenkt ist. Aufgrund dieser Anordnung der Anschlusselemente, des zumindest einen Stellelementes und des zumindest einen Rückstellelementes kann die Antriebseinrichtung eine Grundposition oder eine standardisierte Einbaugröße einnehmen. Auch nach einer Ansteuerung beziehungsweise Aktivierung der Antriebseinrichtung kehrt diese wieder selbständig in die Ausgangsposition mit der vorbestimmten Ausgangslänge zurück. Das zumindest eine Stellelement und das zumindest eine Rückstellelement sind koaxial zueinander positioniert und greifen jeweils an einem Anschlusselement an. Dadurch kann eine platzsparende und bauraumsparende Anordnung geschaffen sein. Diese Antriebseinrichtung ist auch vielseitig einsetzbar, indem am jeweiligen Anschlusselement ein weiteres Bauteil, Anschlussstück, Trägerelement oder dergleichen befestigt wird.

Die Anschlusselemente, das zumindest eine Stellelement und das zumindest eine Rückstellelement sind als ein handhabbares Modul ausgebildet. Durch die Anordnung des Stellelementes und des Rückstellelementes zwischen den Anschlussstücken und deren entgegen gesetzten Wirkrichtungen können diese Einzelbauteile als eine Baugruppe oder ein Modul selbständig zusammengehalten werden, so dass eine Vormontage eines solchen Moduls möglich ist und das aus diesen Bauteilen zusammen gesetzte Modul als einsatzfähige Einheit vorliegt.

Eine weitere bevorzugte Ausgestaltung der Erfindung sieht vor, dass an dem zumindest einen Stellelement eine elektrische Anschlussleitung anschließbar ist, welche vorzugsweise mit einer Steuereinrichtung verbunden ist.

An dem zumindest einen Stellelement ist bevorzugt eine elektrische Anschlussleitung anschließbar ist, welche insbesondere mit einer Steuereinrichtung verbunden sein kann. Dadurch kann mittels der anschließbaren Steuereinrichtung über die Anschlussleitung sowohl eine aktive Ansteuerung des zumindest einen Stellelementes zur Erzeugung einer Stellbewegung erzielt werden, als auch eine Sensorfunktion gegeben sein, welche wiederum durch die Steuereinrichtung erfassbar ist. Durch die an das Stellelement anschließbare Anschlussleitung kann die Antriebseinrichtung auch ohne Anschlussleitung als Sensor und/oder Stellelement eingesetzt werden, welches in Abhängigkeit einer auf das Stellelement wirkenden Umgebungstemperatur aktiviert und betätigt wird.

Des Weiteren ist bevorzugt vorgesehen, dass das Rückstellelement als Federelement oder Balgelement ausgebildet ist. Somit kann eine einfache und kostengünstige Ausgestaltung als auch eine einfache Aufnahme mittels der Anschlusselemente ermöglicht sein.

Bevorzugt weist das Anschlusselement einen Längsschlitz auf, der zur Durchgangsbohrung führt, so dass ein einfaches Einsetzen des Stellelemente an den beiden Anschlusselementen ermöglicht ist. Somit kann eine Montage ohne zusätzliches Werkzeug erfolgen. Aufgrund des dazwischen angeordneten Rückstellelementes werden die Bauteile der Antriebseinrichtung, also die Anschlusselemente, das Stellelement mit den daran angeordneten Klemmelementen und die Rückstellfeder in einer festen Ausgangsposition zueinander angeordnet gehalten.

Vorzugsweise kann ein Ende des Stellelementes durch ein Klemmelement oder einem Stift in einem Anschlusselement umgelenkt werden, so dass in einem gegenüber liegenden Anschlusselement zwei Enden des Stellelementes durch das Klemmelement befestigt sind. Dadurch kann eine Verdoppelung der Stellkraft erzielt werden. Es ist ebenso möglich, eine Mehrfachumlenkung vorzusehen, welche flaschenzugförmig zwischen den Anschlusselementen verläuft.

Das zumindest eine Stellelement aus einer Formgedächtnislegierung ist bevorzugt als ein länglicher Draht ausgebildet. Dies stellt eine sehr einfache Ausführungsform dar. Alternativ kann das Stellelement auch als Rohr oder als Spiralfederelement ausgebildet sein.

Vorzugsweise ist das Stellelement mit einer Hülle umgeben. Dadurch kann ein verbessertes Ansprechverhalten des Stellelementes erzielt werden.

Eine weitere alternative Ausgestaltung der Erfindung sieht vor, dass an dem Anschlusselement ein Heizelement, insbesondere PTC-Element, vorgesehen ist, welches sich zum gegenüberliegenden Anschlusselement erstreckt und von einem spiralförmigen Stellelement umgeben ist. Diese Ausführungsform kann besonders für weitere Einsatzfälle geeignet sein.

Jedes Anschlusselement umfasst einen Montageabschnitt. Dadurch sind Anschlüsse für einen schnellen Einbau der jeweiligen Einsatzzwecke ermöglicht.

Nach einer weiteren alternativen Ausführungsform der Erfindung ist vorgesehen, dass zumindest zwei Stellelemente vorgesehen sind, welche gleiche oder voneinander abweichende Arbeitsbereiche oder Schalttemperaturen aufweisen. Bei abweichenden Arbeitsbereichen der Stellelemente kann eine mehrstufige Regelung oder Ansteuerung gegeben sein. Bei mehreren Stellelementen mit gleichen Arbeitsbereichen kann eine Kraft- oder Wegverstärkung erfolgen.

Die Stellbewegung des zumindest einen Stellelementes kann mit der Steuerungseinrichtung ansteuerbar sein. Dadurch kann beispielsweise eine Zweipunktregelung oder eine Proportionalregelung erfolgen. Eine definierte Ansteuerung des Stellelementes kann durch eine entsprechende Bestromung ermöglicht werden, wodurch gleichzeitig auch durch die Steuerungseinrichtung eine Positionsbestimmung des beweglichen Anschlusselementes gegeben sein kann. Somit ist die Stellbewegung des Stellelementes kontrollierbar und überwachbar.

Alternativ kann vorgesehen sein, dass ein elektrischer Widerstand des zumindest einen Stellelementes mit der Steuereinrichtung erfassbar ist. Dadurch kann beispielsweise auch eine Diagnose über den Ermüdungszustand des Stellelementes oder ein Istwert von der das Stellelement umgebenden Mediumstemperatur erfasst und ausgewertet werden. Eine solche Erfassung von Daten kann zu Steuerungsdiagnose oder Dokumentationszwecke erfolgen.

Die der Erfindung zugrunde liegende Aufgabe wird des Weiteren durch ein Verfahren zur Ansteuerung von der Antriebseinrichtung gelöst, bei der ein Widerstand des zumindest einen Stellelementes von der Steuerungseinrichtung erfasst und/oder das zumindest eine Stellelement zur Erzeugung einer Stellbewegung an der Steuerungseinrichtung mit der Steuerungseinrichtung bestromt. Dadurch ist die Antriebseinrichtung sowohl als Aktor zur Erzeugung einer Stellbewegung sowie als Sensor zur Erfassung des Arbeitszustandes des Stellelementes möglich, wobei insbesondere die sensorische Funktion für die Auswertung und/oder Überwachung der Stellbewegung und/oder des Zustandes des zumindest einen Stellelementes zu Dokumentationszwecken vorgesehen ist.

Die Antriebseinrichtung zur Erzeugung einer Stellbewegung gemäß der Erfindung ist als Antrieb für ein Schaltventil für flüssige oder gasförmige Medien vorgesehen, wobei an einem Anschlusselement der Antriebseinrichtung ein Ventilschließglied anordenbar ist, welches einen Ventilsitz an einer Durchgangsöffnung in einem Ventilgehäuse öffnet und schließt. Durch das Stellelement kann eine durch die Temperatur des Mediums erfolgende Stellbewegung des Ventilschließgliedes zum Öffnen und Schließen des Ventilsitzes ansteuerbar sein, so dass dieses Schaltventil entweder geöffnet oder geschlossen ist. Des Weiteren kann durch eine solche Antriebseinrichtung ein gezieltes Öffnen und Schließen zu einem voreinstellbaren Schaltpunkt vorgesehen sein. Sofern eine Steuerungseinrichtung an die Antriebssteuerung angeschlossen ist, kann die Öffnungs- und Schließbewegung derart ansteuerbar sein, dass eine kontinuierliche, degressive oder progressive Freigabe der Durchtrittsöffnung am Ventilsitz ermöglicht wird.

Bevorzugt ist beim Schaltventil vorgesehen, dass die Antriebseinrichtung in einem hülsenförmigen Gehäuse vorgesehen ist, welche vorzugsweise mit einem Anschlusselement fest verbindbar ist. Dadurch kann eine einfache Montage des Antriebs zum Ventilgehäuse ermöglicht sein.

Das Schaltventil weist bevorzugt an einem dem Ventil gegenüber liegenden Ende des hülsenförmigen Gehäuses ein Verschlusselement auf, welches das hülsenförmige Ende mediendicht verschließt und eine Anschlussleitung nach außen führt. Dadurch kann ein konstruktiv einfacher Aufbau mit einem abdichtenden Ende des Gehäuses, an welchem die Antriebseinrichtung vorgesehen ist, ausgebildet werden. Gleichzeitig kann die Anschlussleitung zur Ansteuerung des zumindest einen Stellelementes in einfacher Form herausgeführt und mit einer Steuereinrichtung verbunden werden.

Das hülsenförmige Gehäuse, in welchem die Antriebseinrichtung aufgenommen ist, wird bevorzugt als Einschraubelement ausgebildet, so dass dieses in das Ventilgehäuse einsetzbar ist. Dadurch kann eine schnelle Komplettierung eines solchen Schaltventils ermöglicht sein.

Bevorzugt ist vorgesehen, dass in einer Durchtrittsöffnung im Ventilgehäuse ein Ventilsitzelement einsetzbar ist. Dadurch kann eine variable Anpassung an verschiedene Einsatzfälle des Schaltventils ermöglicht sein, indem der Ventilsitz, welcher in das Ventilgehäuse einsetzbar ist, sowie das Ventilschließglied, welches mit einem Anschlusselement austauschbar vorgesehen ist, ausgewählt werden.

Das Schaltventil kann bevorzugt als Expansionsventil in Klimakreisläufen eingesetzt werden. Insbesondere kann dieses Schaltventil als direkt schaltendes elektrisch aktiviertes Expansionsventil in Klimakreisläufe verwendet werden.

Alternativ kann das erfindungsgemäße Schaltventil als Thermostatventil in Klimakreisläufen oder Heizkreisläufen eingesetzt werden. Insbesondere in stationären Heizkreisläufen kann ein solches Schaltventil für Regel-, Sicherheits- oder Bypass-Schaltungen verwendet werden.

Darüber hinaus kann das Schaltventil in Übergabestationen, wie beispielsweise der Warmwasseraufbereitung, durch einen Heizkreislauf, eingesetzt werden. Darüber hinaus kann das Schaltventil in Trinkwassersystemen, beispielsweise zur Legionellenschaltung oder Desinfektionsschaltung verwendet werden.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Schnittansicht der erfindungsgemäßen Antriebseinrichtung,
Figur 2 eine schematische Schnittansicht einer alternativen Ausführungsform zu Figur 1,
Figur 3 eine schematische Schnittansicht einer weiteren alternativen Ausführungsform zu Figur 1, die nicht Teil der Erfindung ist,
Figur 4 eine schematische Schnittansicht einer weiteren alternativen Ausführungsform zu Figur 3, die nicht Teil der Erfindung ist,
Figur 5 eine schematische Schnittansicht einer weiteren alternativen Ausführungsform zu Figur 1,
Figur 6 eine schematische Schnittansicht einer weiteren alternativen Ausführungsform zu Figur 1,
Figur 7 eine schematische Schnittansicht einer weiteren alternativen Ausführungsform zu Figur 2 und
Figur 8 eine schematische Schnittdarstellung der Antriebseinrichtung in der Anwendung als Schaltventil.

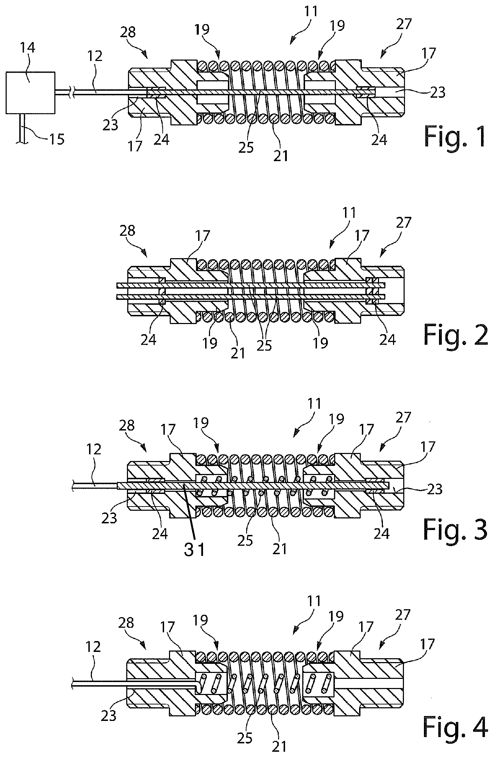

In Figur 1 ist schematisch eine Schnittdarstellung einer Antriebseinrichtung 11 dargestellt, welche über eine Anschlussleitung 12 mit einer Steuerungseinrichtung 14 verbindbar ist. Hierfür kann eine Steckverbindung oder eine Klemmleiste oder dgl. vorgesehen sein. Die Steuerungseinrichtung 14 kann über eine Leitung 15 elektrisch versorgt sein und/oder mit weiteren Datenverarbeitungseinrichtungen, wie beispielsweise Auswerteeinrichtungen, Diagnoseeinrichtungen oder dergleichen, verbunden sein.

Die Antriebseinrichtung 11 umfasst zwei Anschlusselemente 17, welche getrennt zueinander angeordnet sind. Die Anschlusselemente 17 sind vorteilhafterweise zylindrisch ausgebildet und weisen einen ersten Anschlussabschnitt 19 zur Aufnahme eines Rückstellelementes 21 auf, welches gemäß einer ersten Ausführungsform als Spiralfeder ausgebildet ist. Das erste Anschlussabschnitt 19 bildet für die jeweiligen Enden des Rückstellelementes 21 eine Aufnahme und zumindest eine zumindest geringfügige Führung.

Die Anschlusselemente 17 weisen jeweils eine zentrale, vorzugsweise gestufte, Durchgangsbohrung 23 auf. Mittels Klemmelementen 24 ist ein Stellelement 25 in den Durchgangsbohrungen 23 der Anschlusselemente 17 fixiert gehalten. Durch die Klemmelemente 24 kann der Abstand der Anschlusselemente 17 bestimmt sein oder eingestellt werden, wobei die Anschlusselemente 17 aufgrund des Rückstellelementes 21 auf Abstand und somit das Stellelement 25 unter zumindest geringfügiger Spannung gehalten ist. Das Rückstellelement 21 ist bei dieser Ausführungsform als Druckfeder ausgelegt. Die Anschlusselemente 17 weisen vorteilhafterweise einen Längsschlitz auf, der sich vom Außenumfang des Anschlusselementes 17 bis zur Durchgangsbohrung 23 erstreckt. Dadurch können die Klemmelemente 24 vor dem Einbau des Stellelementes 25 in einfacher Weise daran fixiert werden, wobei anschließend eine einfache Montage der Bauteile zueinander ermöglicht ist. Bspw. wird ein Klemmelement 24 in ein Anschlusselement 17 eingesetzt, so dass diese in der gestuften Durchgangsbohrung 23 angreift. Anschließend wird das Rückstellelement 21 auf das Anschlusselement 17 aufgesetzt, bevor das gegenüberliegende Anschlusselement 17 zum Rückstellelement 21 positioniert wird und das gegenüberliegende Ende des Stellelementes 24 in die Durchgangsbohrung 23 des Anschlusselementes 17 über dessen Längsnut eingesetzt wird. Durch einen solchen Aufbau und Anordnung ist nach dem Zusammenbau der Komponenten die Antriebseinrichtung 11 als ein handhabbares Modul beziehungsweise als eigenstände Baugruppe ausgebildet.

Das Stellelement 25 besteht aus einer Formgedächtnislegierung (beispielsweise aus einer NiTi-Legierung, aus einer Legierung aus Cu-Basis oder Fe-Basis oder aus Memory-Kunststoff). In Abhängigkeit des Einsatzfalles können unterschiedliche Arbeitspunkte beziehungsweise Schalttemperaturen eingestellt werden. Im ersten Ausführungsbeispiel ist das Stellelement 25 als Draht ausgebildet.

Das eine Anschlusselement 17 beziehungsweise das rechte Anschlusselement 17 weist einen Montageabschnitt 27 auf, an welchem beispielsweise ein Ventilschließglied oder andere Bauteile befestigbar sind. Das gegenüber liegende Anschlusselement 17 weist einen Montageabschnitt und/oder einen Dichtabschnitt 28 auf, um die Antriebseinrichtung 11 in einem weiteren Gehäuse oder Gehäuseabschnitt aufzunehmen oder an einem Einbauort zu befestigen.

Bei dieser Ausführungsform nach der Erfindung umgibt das Rückstellelement 21 koaxial das Stellelement 25, so dass eine zylindrische Bauform der Antriebseinrichtung 11 gegeben ist. Die Anschlusselemente 17 können aus Kunststoff oder Metall ausgebildet sein.

Alternativ kann des Weiteren vorgesehen sein, dass das Rückstellelement 21 ebenfalls aus einer Formgedächtnislegierung ausgebildet ist.

An einem Ende des Stellelementes 25 ist die Anschlussleitung 12 anschließbar. Die Antriebseinrichtung 11 kann mittels der Steuereinrichtung 14 das Stellelement ansteuern, indem das Stellelement 25 bestromt wird. Dadurch zieht sich das Stellelement 25 zusammen, so dass die beiden Anschlusselemente 17 aufeinander zubewegt werden beziehungsweise soweit eines der beiden Anschlusselemente 17 fest eingespannt ist, wird das gegenüber liegende aktiv auf das feststehende oder fest eingespannte Anschlusselement 17 zubewegt. Sobald über die Steuerungseinrichtung 14 eine Bestromung abgeschaltet wird, erfolgt eine Rückstellung der Antriebseinrichtung 11 durch das Rückstellelement 21, dessen Druckkraft dann überwiegt.

Alternativ kann vorgesehen sein, dass das Stellelement 25 durch ein gasförmiges oder flüssiges Medium umgeben und durch dessen Temperatur angesteuert wird. Sobald eine Temperaturüberschreitung des gasförmigen oder flüssigen Mediums erfolgt, kommt es zu einer Stellbewegung des einen Anschlusselementes 17. Wird das Stellelement 25 aktiviert und eine Steuerungseinrichtung 14 ist angeschlossen, kann über die Steuerungseinrichtung 14 eine Änderung des Widerstandes erfasst werden, um somit diesen Zustand des Stellelementes 25 zu erfassen. Gleichzeitig kann dadurch eine Auswertung der Antriebseinrichtung 11 gegeben sein. In diesem Fall kann die Antriebseinrichtung 11 für eine thermische Regelung eingesetzt werden. Zusätzlich kann zur Temperaturerfassung des flüssigen oder gasförmigen Mediums noch eine aktive Ansteuerung über die Steuerungseinrichtung 14 erfolgen.

In Figur 2 ist eine alternative Ausführungsform zu Figur 1 dargestellt. Diese Ausführungsform weicht dahingehend von Figur 1 ab, dass anstelle eines zentral in der Antriebseinrichtung 11 angeordneten Stellelementes 25 zwei Stellelemente 25 vorgesehen sind. Diese können baugleich sein.

Bevorzugt ist vorgesehen, dass diese voneinander abweichende Schaltpunkte aufweisen, so dass eine zweistufige Stellbewegung der Antriebseinrichtung 11 mittels der Steuerungseinrichtung 14 ansteuerbar ist.

Bei dieser Ausführungsform gemäß Figur 2 kann mittels der Steuerungseinrichtung 14 eine aktive Zweipunktregelung oder auch eine Proportionalregelung mittels eines entsprechenden Regelalgorithmus vorgesehen sein.

Es versteht sich, dass alternativ zu zwei Stellelementen 25 auch mehrere Stellelemente mit gleichen oder unterschiedlichen Schaltpunkten vorhanden sein können.

In Figur 3 ist eine weitere alternative Ausführungsform zu Figur 1 dargestellt, die nicht Teil der Erfindung ist. Diese Ausführungsform unterscheidet sich dadurch, dass anstelle des zentral angeordneten Stellelementes 25 ein Heizelement 31 vorgesehen ist, an welchem die Anschlusselemente 17 verschiebbar vorgesehen sind. Durch Klemmelemente 24 werden die Anschlusselemente 17 analog zu Figur 1 gehalten. Das Stellelement 25 ist spiralförmig ausgebildet und umgibt das Heizelement 31. Bei dieser Ausführungsform ist das Rückstellelement 21 als Zugfeder ausgebildet und positioniert die beiden Anschlusselemente 17 bei einem nicht erwärmten Stellelement 25 in einer Ausgangsposition. Durch die spiralförmige Ausgestaltung des Stellelementes erfolgt bei einer Erwärmung des Stellelementes 25 eine Hubbewegung, das heißt, das Stellelement 25 wirkt als Druckfeder, um die Anschlusselemente 17 auseinander zu drücken, bis beispielsweise durch die Position der Klemmelemente 24 beide Anschlusselemente 17 in einer Endlage positioniert sind, wie dies in Figur 3 dargestellt ist. Eine Ausgangslage der Anschlusselemente 17 wird durch das Rückstellelement 21 angesteuert. Bevorzugt ist als Heizelement 31 ein PTC-Element vorgesehen.

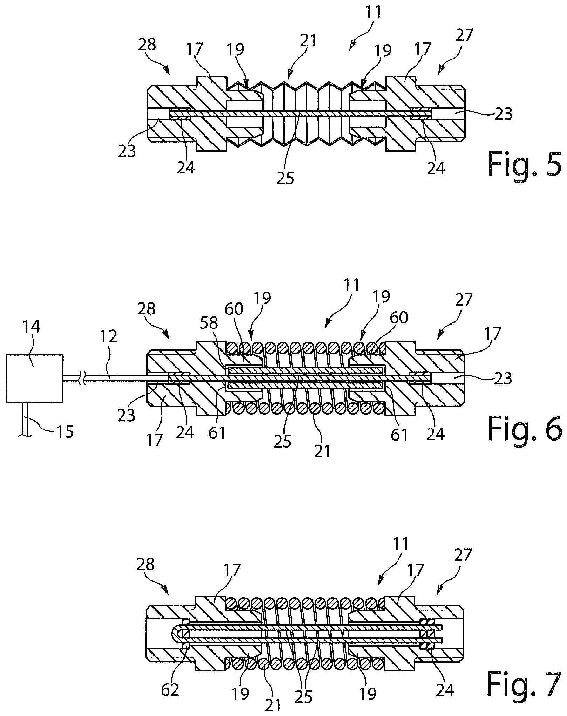

In Figur 4 ist eine alternative Ausführungsform zu Figur 3 dargestellt, die nicht Teil der Erfindung ist. Diese Ausführungsform unterscheidet sich zu der in Figur 3 dahingehend, dass das Stellelement 25 unmittelbar bestromt wird. Ein Heizelement 31 ist nicht vorgesehen. Auch bei dieser Ausführungsform ist das Rückstellelement 21 als Zugfeder ausgebildet, da bei einer Bestromung eine Druckkraft durch das Stellelement 25 auf die Anschlusselemente 17 ausgeübt wird. Damit die Antriebseinrichtung 11 als ein handhabbares Modul ausgebildet ist, sind die Anschlussstücke 17 mit den jeweiligen Enden des Rückstellelementes 21 fest verbunden. Dies kann beispielsweise durch eine Verschraubung, Verklebung, Klemmung oder dergleichen erfolgen. In Figur 5 ist eine weitere alternative Ausführungsform zu Figur 1 dargestellt. Diese Ausführungsform weicht dahingehend von der in Figur 1 ab, dass das Rückstellelement 21 anstelle einer Spiralfeder als Balgelement ausgebildet ist. Ein solches Balgelement kann das Stellelement 25 vollständig gegenüber der Umgebung abschirmen. Alternativ kann das Balgelement auch Durchbrechungen aufweisen, so dass ein gasförmiges oder flüssiges Medium durch das Balgelement hindurch strömen kann.

In Figur 6 ist eine alternative Ausführungsform zu Figur 1 dargestellt. Diese Ausführungsform unterscheidet sich nur dadurch, dass das Stellelement 25 von einer Hülle 58 umgeben ist, welche sich zwischen den beiden Anschlusselementen 17 erstreckt. Vorteilhafterweise ist an jedem Anschlusselement 17 ein Ringbund 60 vorgesehen, durch welchen ein topfförmiger Aufnahmebereich geschaffen ist. Durch das Rückstellelement 21, welches als Druckfeder ausgebildet ist, werden die Anschlusselemente 17 auf einen maximalen Abstand positioniert, der durch die Länge des Stellelementes 25 beziehungsweise der daran angreifenden Klemmelemente 24 bestimmt ist. Die Länge der Hülle 58 ist kleiner als eine Länge des Stellelementes 25 zwischen den jeweiligen Stirnflächen 61 der Anschlusselemente 17 bei einem bestromten Zustand des Stellelementes 25. Im bestromten oder aktivierten Zustand des Stellelementes 25 verkürzt sich dessen Länge. Die Hülle 58 kann beispielsweise aus einem thermoplastischen Kunststoff oder einem Elastomer ausgebildet sein, wobei dessen Innendurchmesser größer als der Außendurchmesser des Stellelementes 25 ist, so dass zwischen dem Stellelement 25 und der Hülle 58 eine Isolierschicht gebildet werden kann. Diese Isolierschicht steht in Abhängigkeit von dem Medium, welches eingesetzt wird. Dies kann Wasser, Öl, Gel, Kältemittel, Kühlmittel oder dergleichen sein.

In Figur 7 ist eine alternative Ausführungsform zu Figur 2 dargestellt. Bei dieser Ausführungsform ist beispielsweise am linken Anschlusselement 17 ein Umlenkelement 62, beispielsweise ein Stift, vorgesehen, welches die Umlenkung des Stellelementes 25 ermöglicht, so dass mit einem elektrischen Anschluss zwei zwischen den Anschlusselementen 17 angeordnete Stellelemente 25 ansteuerbar sind. Alternativ kann auch an jedem Anschlusselement 17 eine Umlenkung eines Stellelementes 25 erfolgen und/oder eine Mehrfachumlenkung vorgesehen sein.

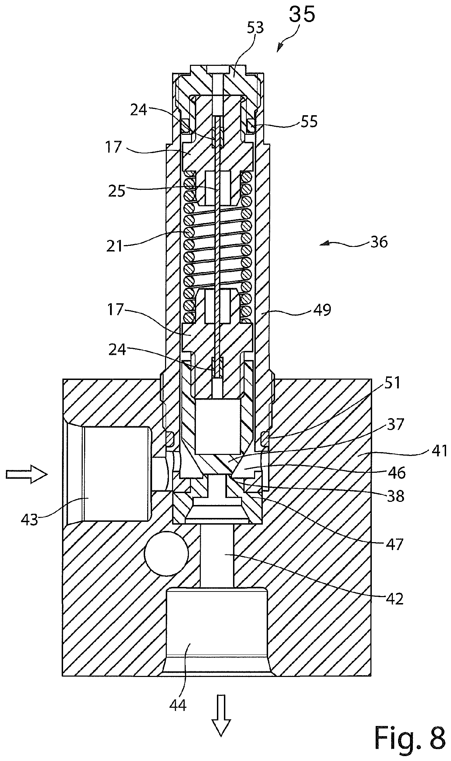

In Figur 8 ist eine schematische Schnittansicht eines Schaltventils 35 dargestellt, bei welchem ein Antrieb 36 zur Ansteuerung einer Öffnungs- und Schließbewegung eines Ventilschließgliedes 37 gegenüber einem Ventilsitz 38 mit der Antriebseinrichtung 11, beispielsweise gemäß Figur 1, erfolgt. Bei diesem Ausführungsbeispiel handelt es sich um ein sogenanntes NC-Schaltventil (Normally Closed-Schaltventil). Die weiteren Ausführungsformen der Antriebseinrichtung 11 können ebenso vorgesehen sein.

Dieses Schaltventil 35 umfasst ein Gehäuse 41 mit einer Durchtrittsöffnung 42, welche eine Zuführöffnung 43 mit einer Auslassöffnung 44 verbindet. Die Zuführöffnung 43 und Auslassöffnung 44 sind als Anschlüsse zur Montage von Anschlussleitungen oder einer Verrohrung ausgebildet. Die Durchtrittsöffnung 42 weist einen Regulierraum 46 auf, in dem beispielsweise ein Ventilsitzelement 47 mit dem Ventilsitz 38 einsetzbar ist. Alternativ kann der Ventilsitz 38 unmittelbar an dem Gehäuse 41 vorgesehen sein. Bei dieser gestellten Ausführungsform ist ermöglicht, dass die Ventilsitzelemente 47 unterschiedlich große Durchgangsbohrungen umfassen, so dass dadurch eine entsprechende Anpassung an den zu regulierenden Massenstrom des flüssigen oder gasförmigen Mediums ermöglicht ist. Der Antrieb 36 ist bevorzugt als Einbaupatrone ausgebildet und in den Regulierraum 46 zumindest teilweise einsetzbar. Dieser weist vorteilhafterweise ein hülsenförmiges Gehäuse 49 auf, welches mit dem Regulierraum 46 verschraubbar ist, wobei vorzugsweise dazwischen liegend eine Dichtung 51 vorgesehen ist, um den Antrieb 36 zum Gehäuse 41 abzudichten. Innerhalb des hülsenförmigen Gehäuses 49 ist die Antriebseinrichtung 11 vorgesehen. An einem zum Ventilsitz 38 weisenden Anschlusselement 17 ist das Ventilschließglied 37 befestigt. Dies kann beispielsweise durch Aufschrauben, Aufpressen oder dergleichen ausgebildet werden. Gegenüber liegend greift an dem zweiten Anschlusselement 17 ein Verschlusselement 53 an, welches einerseits das Anschlusselement 17 fest aufnimmt und andererseits das hülsenförmige Gehäuse 49 dichtend abschließt. Vorteilhafterweise ist eine weitere Dichtung 55 vorgesehen.

Gemäß einer ersten Ausführungsform kann vorgesehen sein, dass dieses Schaltventil 36 als Thermostatventil ausgebildet ist. Sobald das an der Zuführöffnung 43 und im Regulierraum 46 anliegende Medium eine Schalttemperatur des Stellelementes 25 übersteigt, wird das Stellelement 25 aktiviert. Die Stellkraft des Stellelementes 25 ist größer als die Rückstellkraft des Rückstellelementes 21. Dadurch wird das Ventilschließglied 37 von dem Ventilsitz 38 abgehoben, und der Massenstrom kann zur Ausgangsöffnung 44 und somit in den Kreislauf gelangen. Sobald die Temperatur des Mediums im Regulierraum 46 und am Stellelement 25 sinkt, wird eine Schließbewegung des Ventilschließgliedes 37 eingeleitet.

Ein solches Ausführungsbeispiel eines Schaltventils kann auch als ein Sicherheitsschaltventil ausgebildet sein.

Alternativ kann das Schaltventil 35 gemäß Figur 8 mit einer Anschlussleitung 12 versehen sein, so dass über eine Steuerungseinrichtung 14 die Stellbewegung des Ventilschließgliedes 37 durch Bestromung des Stellelementes 25 gezielt oder zusätzlich ansteuerbar ist und/oder das Stellelement als Sensor abfragbar ist. Durch eine solche Ansteuerung kann beispielsweise ein direkt schaltendes, elektrisch aktiviertes Expansionsventil in Klimakreisläufen ausgebildet werden. Ebenso kann diese Ausführungsform als Expansionsventil mit kombiniertem Schaltventil in Klimakreisläufen eingesetzt werden. Des Weiteren kann ein solches Schaltventil als Regel- oder Bypass-Ventil eingesetzt und gezielt angesteuert werden.

Des Weiteren kann bei einem solchen Schaltventil 35 mit einer Steuerungseinrichtung 14 eine Überwachung des Schaltzeitpunkts für ein Öffnen oder Schließen des Ventils erfasst und überwacht werden.

Diese Ausführungsform des Schaltventils 35, welches elektrisch ansteuerbar ist, weist gegenüber herkömmlichen Expansionsventilen den Vorteil auf, dass diese geräuschlos arbeiten und darüber hinaus eine kleine Bauform aufweisen können. Darüber hinaus wird kein elektromagnetischer Antrieb benötigt. Darüber hinaus kann auch auf einen Bewegungsantrieb, wie beispielsweise einen Thermokopf mit einer Gasfüllung verzichtet werden.

Alle vorgenannten Merkmale sind jeweils für sich erfindungswesentlich und können beliebig miteinander kombinierbar sein.

## Patentansprüche

1. Antriebseinrichtung zur Erzeugung einer Stellbewegung mit zumindest einem Stellelement (25) aus einer Formgedächtnislegierung, mit zumindest einem Rückstellelement (21), welches der Stellbewegung des zumindest einen Stellelementes (25) entgegen wirkt und das zumindest eine Stellelement (25) zwischen zwei getrennt voneinander und einander zugeordneten Anschlusselementen (17) aufgenommen und an jedem Anschlusselement (17) angreift oder befestigt ist, dass die Anschlusselemente (17) durch das zumindest eine Stellelement (25) sowie das zumindest eine Rückstellelement (21), die zwischen den Anschlusselementen (17) positioniert sind, auf Abstand gehalten sind und durch deren entgegen gesetzten Wirkrichtungen die Anschlusselemente (17) in einer definierten Ausgangslage für die Ansteuerung einer Stellbewegung positioniert sind, und das zumindest eine Stellelement (25) und das zumindest eine Rückstellelement (21) koaxial zueinander positioniert sind,
- wobei jedes Anschlusselement (17) einen ersten Anschlussabschnitt (19) zur Führung des zumindest einen Rückstellelementes (21) aufweist,
- wobei das zumindest eine Stellelement (25) und das zumindest eine Rückstellelement (24) jeweils an den Anschlusselementen (17) angreifen und das zumindest eine Rückstellelement (21) das Stellelement (25) umgibt,
**dadurch gekennzeichnet,**
- **dass** das Stellelement (25) mit zumindest einem Klemmelement (24) in einer Durchgangsbohrung (23) des Anschlusselements (17) gehalten oder zumindest einfach umgelenkt ist,
- **dass** jedes Anschlusselement (17) einen Montageabschnitt (27) umfasst, der dem Anschlussabschnitt (19) gegenüberliegt und
- **dass** die Anschlusselemente (17), das zumindest eine Stellelement (25) und das zumindest eine Rückstellelement (21) als ein handhabbares Modul ausgebildet sind.

2. Antriebseinrichtung nach Anspruch 1, **dadurch gekennzeichnet, dass** an dem zumindest einen Stellelement (25) eine elektrische Anschlussleitung (12) anschließbar ist, welche vorzugsweise mit einer Steuerungseinrichtung (14) verbunden ist, wobei eine Stellbewegung des zumindest einen Stellelements (25) mit der Steuerungseinrichtung (14) ansteuerbar ist oder ein elektrischer Widerstand des zumindest einen Stellelementes (25) mit der Steuerungseinrichtung (14) erfassbar ist.

3. Antriebseinrichtung nach Anspruch 1, **dadurch gekennzeichnet, dass** das Stellelement (25) als ein länglicher Draht, als Rohr oder als Spiralfederelement ausgebildet ist, das vorzugsweise von einer Hülle (58) umgeben ist.

4. Antriebseinrichtung nach Anspruch 1, **dadurch gekennzeichnet, dass** an einem Anschlusselement (17) ein Heizelement, insbesondere ein PTC-Element, vorgesehen ist, welches sich in Richtung auf das gegenüber liegende Anschlusselement (17) erstreckt und zumindest von einem spiralförmigen Stellelement (25) umgeben ist.

5. Antriebseinrichtung nach Anspruch 1, **dadurch gekennzeichnet, dass** zumindest ein Anschlusselement (17) einen Montage- und/oder Dichtungsabschnitt (27, 28) aufweist.

6. Antriebseinrichtung nach Anspruch 1, **dadurch gekennzeichnet, dass** zumindest zwei Stellelemente (25) vorgesehen sind, welche voneinander abweichende Arbeitsbereiche oder Schaltpunkte aufweisen.

7. Verfahren zur Ansteuerung der Antriebseinrichtung (11) nach einem der Ansprüche 1 bis 6, **dadurch gekennzeichnet, dass** ein elektrischer Widerstand des Stellelementes (25) an einer Steuerungseinrichtung (14) erfasst wird und/oder das zumindest eine Stellelement (25) zur Erzeugung einer Stellbewegung mit der Steuerungseinrichtung (14) bestromt wird und/oder dass eine Stellbewegung durch eine Umgebungstemperatur angesteuert wird.

8. Schaltventil für flüssige oder gasförmige Medien, mit einem Gehäuse (41), welches zumindest eine Durchtrittsöffnung (42) aufweist, die eine Zuführöffnung (43) mit einer Auslassöffnung (44) verbindet, mit einem in der Durchtrittsöffnung (44) angeordneten Ventilsitz (38), der durch ein Ventilschließglied (37) verschließbar ist, welches mit einem an dem Gehäuse (41) anordenbaren Antrieb (36) ansteuerbar ist, **dadurch gekennzeichnet, dass** der Antrieb (36) eine Antriebseinrichtung (11) nach einem der Ansprüche 1 bis 6 aufweist und an einem Anschlusselement (17) der Antriebseinrichtung (11) das Ventilschließglied (37) anordenbar ist.

9. Schaltventil nach Anspruch 8, **dadurch gekennzeichnet, dass** die Antriebseinrichtung (11) in einem hülsenförmigen Gehäuse (49) vorgesehen ist und mit einem Anschlusselement (17) fest verbindbar ist, und dass an einem dem Ventilschließglied (37) gegenüber liegenden Ende ein Verschlusselement (53) vorgesehen ist, welches das hülsenförmige Gehäuse (49) mediumsdicht, insbesondere mit einem Dichtelement (55), verschließt und vorzugsweise eine Anschlussleitung nach außen führt.

10. Schaltventil nach Anspruch 9, **dadurch gekennzeichnet, dass** das hülsenförmige Gehäuse (49) des Antriebs (36) als Einschraubelement in das Gehäuse (41) einsetzbar ist.

11. Schaltventil nach Anspruch 8, **dadurch gekennzeichnet, dass** in die Durchtrittsöffnung (42) ein zum Regulierraum (46) weisendes Ventilsitzelement (47) einsetzbar ist.

12. Verwendung des Schaltventils nach einem der Ansprüche 8 bis 11 als Expansionsventil in Klimakreisläufen, als Thermostatventil für Klima- oder Heizkreisläufe oder als Schaltventil in Trinkwasserversorgungssystemen.

## Claims

1. Drive device for the generation of an actuation movement, having at least one actuation element (25) made from a memory shape alloy, having at least one resetting element (21) which counteracts the actuation movement of the at least one actuation element (25), and the at least one actuation element (25) is received between two connection elements (17) that are arranged separately from each other and with spacing apart from each other and engages with or is fastened to each connection element (17), the connection elements (17) are held at a distance by the at least one actuation element (25) and the at least one resetting element (21), which are positioned between the connection elements (17), and, as a result of the opposing directions of action thereof, the connection elements (17) are positioned in a defined starting position for controlling an actuation movement, and the at least one actuation element (25) and the at least one resetting element (21) are positioned coaxially relative to each other,
- wherein each connection element (17) comprises a first connection section (19) for guiding the at least one resetting element (21),
- wherein the at least one actuation element (25)and the at least one resetting element (21) each engage with the connection elements (17) and the at least one resetting element (31) surrounds the actuation element (25),
**characterized in**
- **that** the actuation element (25) is held with a clamping element (24) in a through bore (23) of the connection element (17) or is at least simply redirected,
- each connection element (17) has an installation section (27) opposite to the connection section (19), and
- the connection elements (17), the at least one actuation element (25) and the at least one resetting element (21) are formed as a manageable module.

2. Drive device according to claim 1, **characterised in that** an electrical connection line (12) is connectable to the at least one actuation element (25), said connection line preferably being connected to a control device (14), wherein an actuation movement of the at least one actuation element (25) is controllable with the control device (14), or an electrical resistance of the at least one actuation element (215) is registerable with the control device (14).

3. Drive device according to claim 1, **characterised in that** the actuation element (25) is formed as an elongated wire, as a tube or as a spiral spring element, which is preferably surrounded by a cover (58) .

4. Drive device according to claim 1, **characterised in that** a heating element, in particular a PTC element, is provided on a connection element (17), said heating element extending in the direction of the opposite connection element (17) and being surrounded at least by a spiral-shaped actuation element (25).

5. Drive device according to claim 1, **characterised in that** at least one connection element (17) has an installation and/or sealed section (27, 28).

6. Drive device according to claim 1, **characterised in that** at least two actuation elements (25) are provided, which have different operating ranges or switching points.

7. Method for controlling the drive device (11) according to one of claims 1 to 6, **characterised in that** an electrical resistance of the actuation element (25) is registered on a control device (14) and/or the at least one actuation element (25) is fed with a current by the control device (14) for the generation of an actuation movement, and/or an actuation movement is controlled by an ambient temperature.

8. Switching valve for liquid or gaseous media, having a housing (41) which has at least one passage opening (42) that connects a supply opening (43) to an outlet opening (44), having a valve seat (38) arranged in the passage opening (44), said valve seat being able to be closed by a valve closing member (37) that is controllable with a drive (36) which is arrangable on the housing (41), **characterised in that** the drive (36) has a drive device (11) according to one of claims 1 to 6 and the valve closing member (37) is arrangable on a connection element (17) of the drive device (11).

9. witching valve according to claim 8, **characterised in that** the drive device (11) is provided in a sleeve-like housing (49) and is connectable fixedly to a connection element (17), and Switching valve according to claim 14, **characterised in that** a locking element (53) is provided on an end opposite the valve closing member (37), said locking element sealing the sleeve-like housing with media-tightness, in particular with a sealing element (55), and preferably guiding a connection line to the outside.

10. Switching valve according to claim 9, **characterised in that** the sleeve-like housing (49) of the drive (36) is insertable into the housing (41) as a screw-in element.

11. Switching valve according to claim 8, **characterised in that** a valve seat element (47) pointing towards the regulating space (46) is insertable into the passage opening (42).

12. Use of the switching valve according to claim 8 to 11 as an expansion valve in air conditioning circuits, as a thermostat valve for air conditioning circuits or heating circuits, or as a switching valve in drinking water supply systems.

## Revendications

1. Dispositif d'entraînement destiné à produire un mouvement de réglage, avec au moins un élément de réglage (25) réalisé en un alliage à mémoire de forme, avec au moins un élément de rappel (21) qui agit contre le mouvement de réglage dudit au moins un élément de réglage (25), dispositif dans lequel ledit au moins un élément de réglage (25) est reçu entre deux éléments de raccordement (17) séparés l'un de l'autre et affectés l'un à l'autre et appuie contre chaque élément de raccordement (17) ou est fixé sur celui-ci, les éléments de raccordement (17) sont maintenus à une distance donnée l'un de l'autre par ledit au moins un élément de réglage (25) ainsi que par ledit au moins un élément de rappel (21) lesquels sont positionnés entre les éléments de raccordement (17) et permettent, grâce à leurs sens d'action opposés, de positionner les éléments de raccordement (17) dans une position initiale définie pour commander un mouvement de réglage, et ledit au moins un élément de réglage (25) et ledit au moins un élément de rappel (21) sont positionnés de manière coaxiale l'un par rapport à l'autre,
- chaque élément de raccordement (17) présentant une première partie de raccordement (19) destinée à guider ledit au moins un élément de rappel (21),
- ledit au moins un élément de réglage (25) et ledit au moins un élément de rappel (24) appuyant respectivement contre les éléments de raccordement (17) et ledit au moins un élément de rappel (21) entourant l'élément de réglage (25),
**caractérisé en ce que**
- l'élément de réglage (25) est maintenu, ou renvoyé de manière simple, grâce à au moins un élément de serrage (24) dans un trou traversant (23) de l'élément de raccordement (17).
- chaque élément de raccordement (17) comprend une partie de montage (27) qui est située du côté opposé à la partie de raccordement (19) et
- les éléments de raccordement (17), ledit au moins un élément de réglage (25) et ledit au moins un élément de rappel (21) sont réalisés sous la forme d'un module maniable.

2. Dispositif d'entraînement selon la revendication 1, **caractérisé en ce qu'**audit au moins un élément de réglage (25) peut être raccordée une ligne de raccordement électrique (12) qui est reliée de préférence à un dispositif de commande (14), un mouvement de réglage dudit au moins un élément de réglage (25) pouvant être commandé avec le dispositif de commande (14), ou une résistance électrique dudit au moins un élément de réglage (25) pouvant être saisie grâce au dispositif de commande (14) .

3. Dispositif d'entraînement selon la revendication 1, **caractérisé en ce que** l'élément de réglage (25) est réalisé sous la forme d'un fil allongé, en tant que tube ou en tant qu'élément ressort en spirale, et est entouré de préférence d'une enveloppe (58).

4. Dispositif d'entraînement selon la revendication 1, **caractérisé en ce que** sur un élément de raccordement (17) est prévu un élément chauffant, en particulier un élément à coefficient de température positif (CTP), qui s'étend en direction de l'élément de raccordement (17) situé en face et qui est entouré au moins par un élément de réglage (25) en forme de spirale.

5. Dispositif d'entraînement selon la revendication 1, **caractérisé en ce qu'**au moins un élément de raccordement (17) présente une partie de montage et/ou d'étanchéité (27, 28).

6. Dispositif d'entraînement selon la revendication 1, **caractérisé en ce qu'**au moins deux éléments de réglage (25) sont prévus, lesquels présentent des zones de travail ou des points de commutation qui diffèrent l'un(e) de l'autre.

7. Procédé destiné à commander le dispositif d'entraînement (11) selon l'une quelconque des revendications 1 à 6, **caractérisé en ce qu'**une résistance électrique de l'élément de réglage (25) est saisie au niveau d'un dispositif de commande (14) et/ou que ledit au moins un élément de réglage (25) est mis sous tension par le dispositif de commande (14) en vue de produire un mouvement de réglage et/ou qu'un mouvement de réglage est commandé par une température ambiante.

8. Soupape de commutation pour des fluides liquides ou gazeux, pourvue d'un boîtier (41) qui présente au moins un trou de passage (42) reliant un orifice d'entrée (43) à un orifice de sortie (44), pourvue d'un siège de soupape (38) disposé dans le trou de passage (44) et pouvant être obturé par un organe d'obturation de soupape (37) qui peut être commandé par un entraînement (36) pouvant être disposé dans le boîtier (41), **caractérisée en ce que** l'entraînement (36) présente un dispositif d'entraînement (11) selon l'une quelconque des revendications 1 à 6 et que l'organe d'obturation de soupape (37) peut être disposé sur un élément de raccordement (17) du dispositif d'entraînement (11) .

9. Soupape de commutation selon la revendication 8, **caractérisée en ce que** le dispositif d'entraînement (11) est prévu dans un boîtier (49) en forme de douille et peut être relié de manière fixe à un élément de raccordement (17) et **en ce qu'**à une extrémité opposée à l'organe d'obturation de soupape (37) est prévu un élément d'obturation (53) qui obture le boîtier (49) en forme de douille de manière étanche au fluide, en particulier grâce à un élément d'étanchéité (55), et que de préférence une ligne de raccordement mène vers l'extérieur.

10. Soupape de commutation selon la revendication 9, **caractérisée en ce que** le boîtier (49) en forme de douille de l'entraînement (36) peut être inséré dans le boîtier (41) en tant qu'élément vissable.

11. Soupape de commutation selon la revendication 8, **caractérisée en ce qu'**un élément de siège de soupape (47) tourné vers l'espace de régulation (46) peut être inséré dans le trou de passage (42).

12. Utilisation de la soupape de commutation selon l'une quelconque des revendications 8 à 11 en tant que soupape de détente dans des circuits de climatisation, en tant que soupape thermostatique pour des circuits de climatisation ou de chauffage, ou en tant que soupape de commutation dans des systèmes d'approvisionnement en eau potable.
